# EUROPEAN PATENT SPECIFICATION

(11) **EP 0 858 829 B1**
(45) Date of publication and mention of the grant of the patent: **22.09.2004**
(21) Application number: 98100207.4
(22) Date of filing: 08.01.1998
(51) Int. Cl.: B01F 7/04, B01J 19/18, B01J 10/02

(54) **High surface intermeshing profile reactor**
Reaktor mit ineinandergreifenden grossflächigen Profilen
Réacteur présentant des profilés à haute surface s'emboîtant

(30) Priority: 15.01.1997 US 784167
(43) Date of publication of application: 19.08.1998
(73) Proprietor: ARTEVA TECHNOLOGIES S.à.r.l., 8001 Zürich (CH)
(72) Inventor: Lohe,Hans, 61476 Kronberg (DE); Hey, Hartmut, 55283 Nierstein (DE); Shaw, Gordon, Charlotte, NC 28226-2909 (US); Stikeleather, W. Jeffrey, Charlotte, NC 28226 (US)
(74) Representative: von Kreisler, Alek, Dipl.-Chem.

(56) References cited:
- EP-A- 0 715 881
- WO-A-88/04198
- DE-A- 3 430 885
- US-A- 5 399 012
- PATENT ABSTRACTS OF JAPAN vol. 012, no. 033 (C-472), 30 January 1988 & JP 62 180746 A (MITSUBISHI HEAVY IND LTD), 8 August 1987

## Description

### Background of the Invention

### 1) Field of the Invention

This invention relates generally to an apparatus for converting a liquid of low viscosity into a liquid of high viscosity. In particular, the present invention concerns a reactor especially suitable for polycondensation reactions in which a volatile component is removed and a polymeric material of high viscosity is produced while remaining in a liquid state within the reactor. Most specifically, this invention relates to an apparatus for affecting polycondensation to make polyesters or polyamides, such as polyethylene terephthalate or nylon.

### 2) Prior Art

The commercial preparation of most linear condensation polymers, such as polyesters or polyamides, involves heating monomer starting materials to cause progressive condensation with loss of low molecular weight volatile material until the desired molecular weight level is achieved. For example, polyethylene terephthalate, is typically formed from reacting ethylene glycol and either terephthalic acid or its ester equivalent - dimethyl terephthalate: either reaction forms the monomer bis-2-hydroxyethyl terephthalate. By heating the monomer to proper temperatures, generally with increasingly low pressures, the monomer polymerizes with evolution of ethylene glycol until the desired fiber or film forming viscosity desired is achieved. The process is usually carried out in two or more stages with intermediate formation of a low-molecular weight, low-viscosity polymeric'liquid which is then passed through vessels which are maintained at proper temperatures and low pressures to increase the viscosity. These vessels are customarily known as polymer finishers designed to increase the low viscosity polymeric liquid material to a relative high viscosity liquid material. Many of these vessels are "wiped" reactors meaning at least some of the interior reactor surfaces and/or interior components surfaces are "wiped", not by direct contact, but by wiping the liquid on the interior surfaces into a thin film. Such apparatus and process are known from the following U.S. Patents: 3,057,702; 3,248,180; 3,440,019; 3,591,344; 4,801,433 and 5,055,273

EP 0 715 881 A2 discloses a self-cleaning mixer/ reactor which teaches the use of intermeshing gears wheels (that resemble guillotines) and kneading bars. Kinematic cleaning is understood as being the closet possible approach of the parts of the mixer during rotation, without blocking. Within this reactor, the surfaces of the stirrers are scratching against each other to be cleaned.

A reactor combining the features of high throughput, having high thin layer surface area, being low in shear and being substantially free of most areas where polymer can buildup is needed.

As polymer technology has advanced, the industry has demanded polymers having more specific characteristics. For example, the industry demands improved yarns having higher tenacity which means that it is necessary to increase the relative viscosity of the polymer. Conventional reactors suffer several disadvantages in that for higher viscosity polymers, these reactors would have to be excessively large in order to achieve the desired IV and therefore are impractical. Primarily, conventional reactors have several disadvantages such that they are less efficient than the apparatus of the present invention. For example, conventional reactors have a central shaft which tends to restrict the vapor flow of the volatile material to the vacuum exhaust outlet because polymer collects on the surface of the shaft, thereby reducing the effective vapor path. Polymer collection also creates stagnate areas around the shaft ultimately producing a carbonaceous contaminate within the polymeric material. Likewise, polymer buildup can occur in other stagnate regions within the vessel especially in regions of the vessel which are not satisfactorily wiped by an agitator. It is therefore necessary to choose a large surface to volume ratio of the polymer melt and to operate such a reactor under reduced pressure in a way that does not block the vapor path and in a manner which prevents polymer buildup such as by progressively wiping all interior surfaces of the reactor.

Thus there is a need for a device for continuous polycondensation of melts in which you maximize the surface area to reactor volume ratio, but do not block the vapor flow path and satisfy the criteria of wiping all interior surfaces of the reactor.

This and other objects are solved by a polycondensation reactor according to claim 1.

### Summary of the Invention

The present invention provides a device for continuous polycondensation of polymer melts which comprises a heatable, cylindrical, horizontal or almost horizontal reactor provided with an inlet at one end, at least one outlet at the other end for the polymer melt, and a vapor outlet. The reactor contains stirrers for the liquid polymer melt adapt to the shape of the reactor which stir the polymer melt and wipe all interior surfaces of the reactor. The space between each stirrer and between the edge of each stirrer and the wall of the reactors is very small, but it is still wiped by the flow mechanics of the polymer. Accordingly, wiped wall reactors of the type disclosed herein do'not "wipe" a surface like a windshield wiper wipes a windshield, i.e. with contact, but instead, the stirrers or wipers spread the polymer into a thin film so that the volatile components volatilize more quickly and exit the reactor through the vapor outlet. Wiping eliminates the buildup of polymeric liquid which becomes carbonaceous material upon becoming stagnate as with conventional reactors. Additionally, the reactor of the present invention achieves a high surface area to reactor volume ratio which spreads the liquid polymer melt into a plurality of thin films allowing the volatile material to volatilize more quickly. The arrangement of the stirrers and the design of the reactor of the present invention are such that there is no blockage of the vapor flow path.

In accordance with the invention, two parallel shafts having a plurality or stirrers on each shaft are spaced from one another with spacers such that stirrers from one shaft intermesh with stirrers from the parallel shaft with such spacing that the stirrers wipe the polymer melt contact surfaces of one another. Additionally, the stirrers wipe the interior surfaces of the peripheral wall of the reactor. The stirrers of the present invention maximize the surface area to reactor volume ratio without blocking the vapor path and without preventing stagnation of the polymer melt thereby producing a high quality IV polymer (IV means intrinsic viscosity) having relatively low or no carbonaceous material therein.

### Brief Description of the Drawings

Other objects and advantages of the present invention will become apparent upon reading the following detailed description and upon reference to the drawings, in which:
Figure 1) is a partially perspective, exploded view of the arrangement of the stirrers and spacers within a reactor;
Figure 2) is a frontal-end view of a cycloid profile stirrer with corresponding spacer;
Figures 3) is a frontal-end view of another stirrer embodiment in the shape of an involute profile;
Figure 4) is a frontal-end view of two stirrers indexed at 45°;
Figure 5) is an end view of the spacer employed when employing 45° stirrer indexing;
Figure 6) is a cross sectional end view of the shape of both the involute and the cycloid stirrers overlapped for comparison of profile shape;
Figure 7) is a perspective view of one shaft with several stirrers and spacers mounted thereon in which the stirrers are indexed 90° from one another;
Figure 8) shows a plurality of stirrers in intermeshing relationship with one another at various degrees of rotation of the parallel shafts;
Figure 9) is a cross-sectional end view through the middle of the reactor with two parallel shafts and the profiles of the stirrers and the polymer pool level and vapor path being clearly illustrated;
Figure 10) is a perspective view of the end covers for the reactor of the present invention; and
Figure 11) is a perspective view of the reactor shell illustrating the deviation necessary for drainage of the polymer from the reactor.

### Detailed Description of the Invention

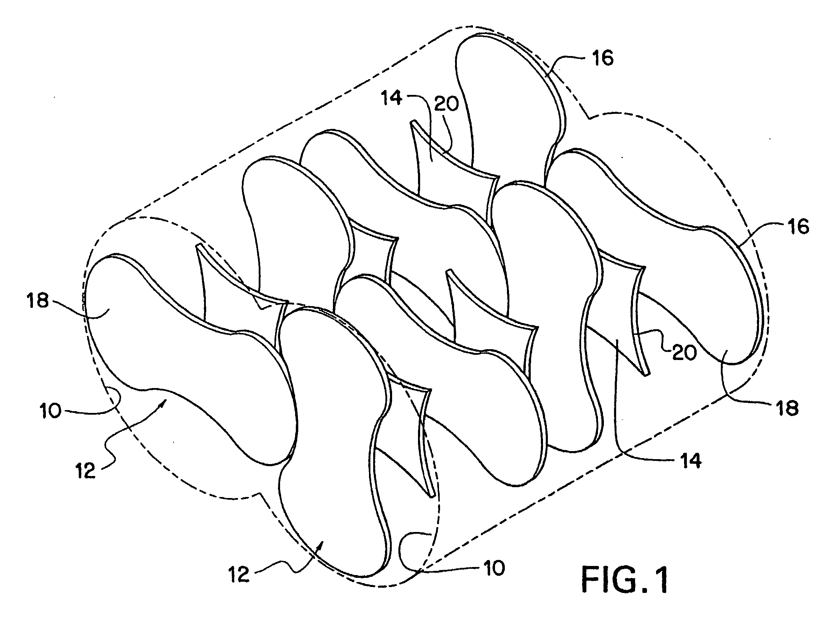

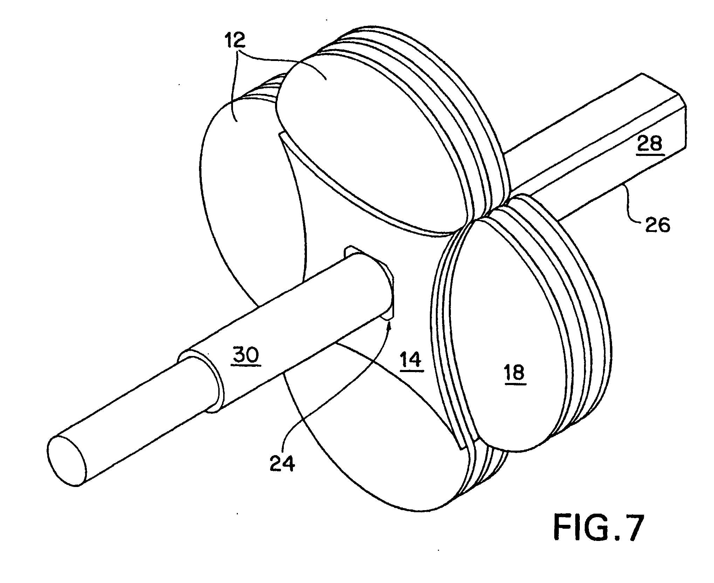

Figure 1 shows the interior profile 10 (i.e., the inner wetted surface) of a reactor (not shown) with an exploded view of the stirrers 12 and spacers 14. The stirrers 12 and corresponding spacers 14 are shown in two parallel groups, each group being mounted on a shaft (not shown). The two parallel groups of stirrers and spacers rotate, preferably in opposite directions, into and out of the polymer, thereby forming thin films of polymer on each stirrer and on the interior wall of the reactor by the wiping action, which allows the volatile component to more quickly volatize. It is not only the movement of the stirrers and spacers that wipe the liquid within the reactor into a thin film, but also the fluid mechanics of the liquid in the reactor. In other words, the viscosity of the liquid aids in wiping the various interior surfaces in the reactor by entertaining any fluid in the area of a moving surface to move along with such surfaces. While Figure 1 is an exploded view showing the various components spaced apart, all the stirrers 12 and spacers 14 in one group are actually tightly mounted adjacent one another on a rotating shaft (see Figure 7).

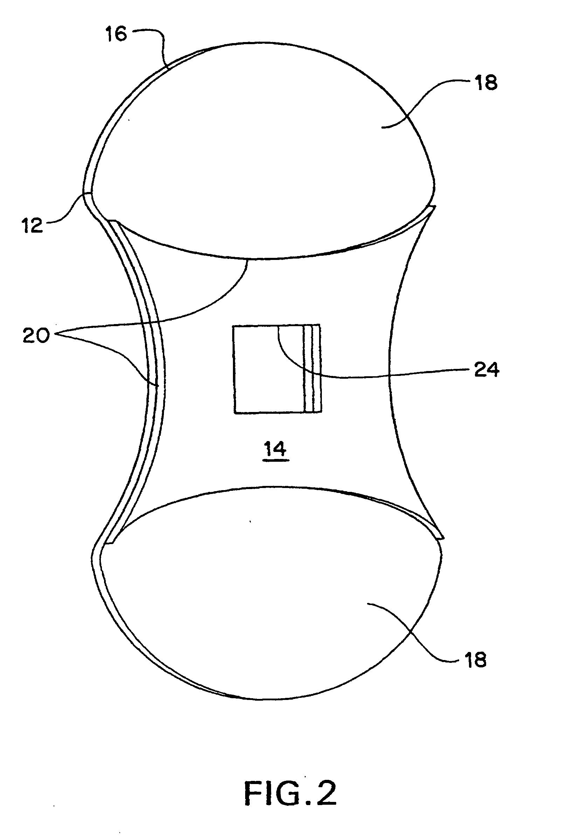

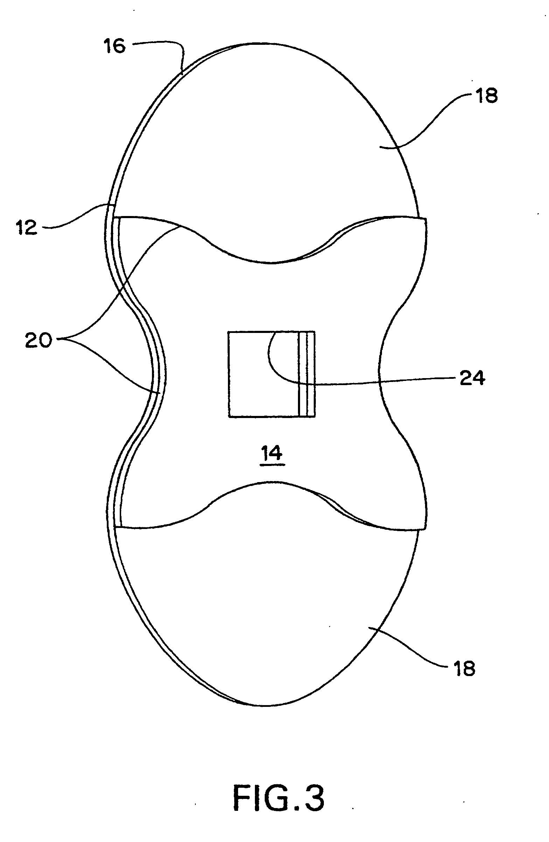

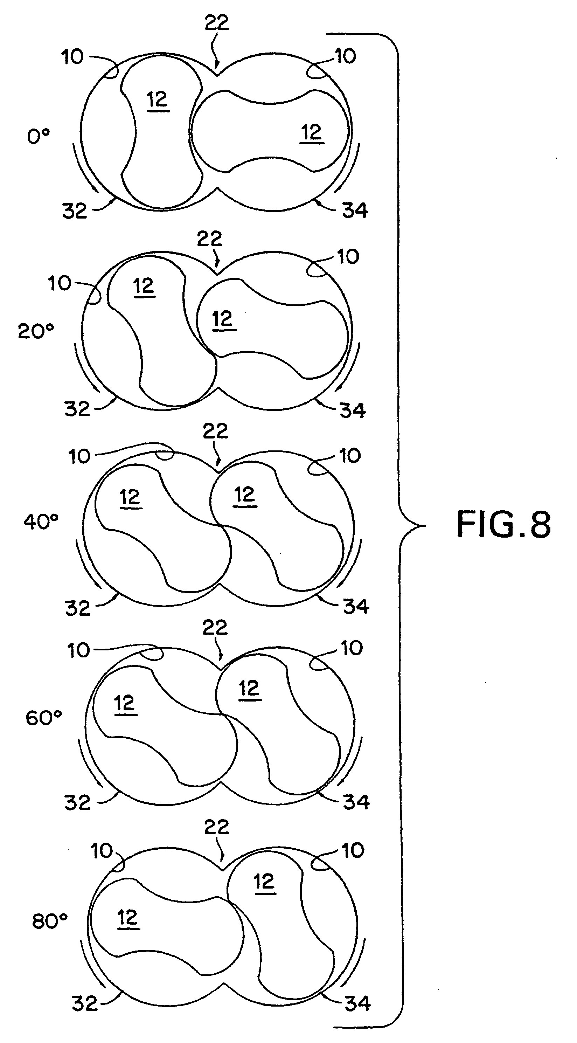

Turning to Figures 2 and 3, the two geometric profiles of the stirrers of the present invention are the cycloid profile of Figure 2 and the involute stirrer profile of Figure 3. Both stirrer profile have the characteristic close spacing along the perimeters of mating stirrer elements upon rotation, as shown in Figure 8. The peripheral spacing of the stirrers wipes the interior surface 10 of the reactor shell as well as wiping the exposed surface of each stirrer. The reactor shell is wiped by the extreme peripheral edge 16 of the rotating stirrers and the face 18 of each stirrer 12 is wiped by the face 18 of adjacent stirrers. Note that the end stirrers at each end of the reactor are spaced from the end plates by an amount approximately equal to the spacing between each stirrer.

In the particular stirrers illustrated by Figures 2 and 3 each stirrer 12 as two faces 18, the outer peripheral edge 16 of which is in close spaced relationship to the peripheral edge 16 of an adjacent stirrer as shown in Figure 1. Each stirrer face 18 can be formed from a solid sheet material or from a foraminous member. For example, the stirrer face can be formed from metal, plastic or composite materials capable of withstanding the reactor temperature, the physical load of the liquid on the rotating stirrers, and being inert to the liquid. If the face 18 is made from foraminous material, such as metallic screen, the opening must be small enough to permit and support the liquid bridging the opening, such that a thin film of liquid is on each stirrer face 18 as it rotates out of the polymer liquid.

Associated with each stirrer 12 is a spacer 14 to space apart each stirrer from another. The spacers 14 . are made from a solid material and positioned tightly against each stirrer 12, thereby preventing liquid from flowing between each spacer and stirrer. Only the stirrer face 18 and its peripheral edge 16, and the peripheral edge 20 of each spacer 14, and the interior surface 10 of the reactor 22 are exposed to the liquid.

Positioned centrally of each spacer 14 and each stirrer 12 is an aperture 24 through which a shaft 26 (see Figure 7) rotates the stirrers 12 and spacers 14.

Figure 2 shows the shape of stirrer 12 in an cycloid profile. Figure 3 shows the shape of the stirrer 12 in an involute profile. Note that the spacer 14 (in both Figures 2 and 3) is a quadrilateral member, each edge 20 of which is identically configured. The thickness of the stirrer 10 depends on many factors such as the load of the polymer in the reactor, the rotating speed of the stirrer, the temperature of the reactor, etc. The thickness of each spacer 14 depends on the fluid mechanics of the liquid, as well as the structural rigidity of the stirrers 12. If the stirrers 12 are sufficiently structurally rigid that they do not flex under operating conditions, then the thickness of the spacers depends only on the fluid mechanics of the liquid in the reactor so that a wiping action is achieved.

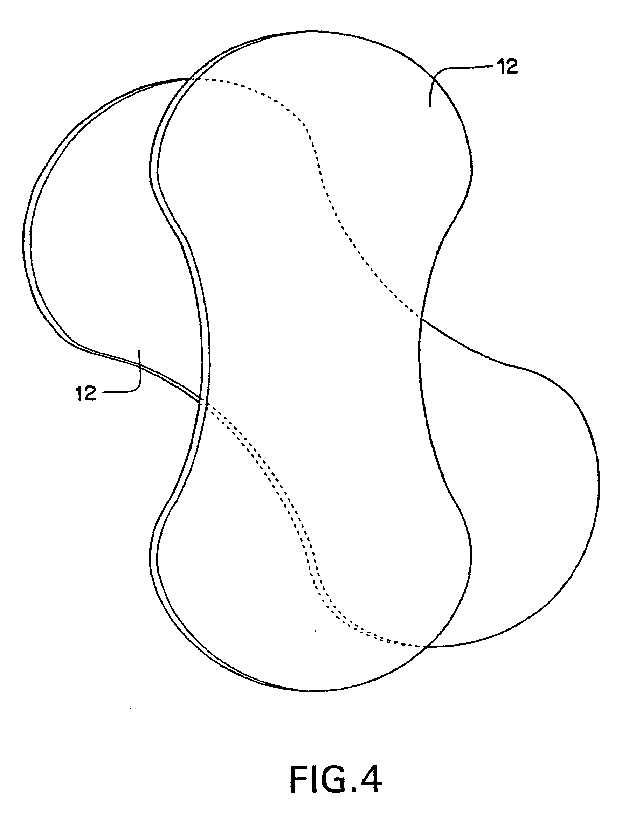

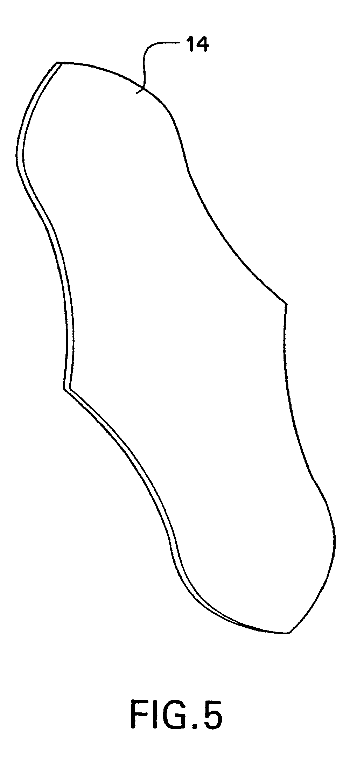

Although the spacers 14 shown in each of Figures 2 and 3 are generally quadrangular in shape, the actual shape depends upon the indexing of each stirrer 12 on the same shaft. Turning to Figure 4, there is shown a pair of stirrers 12 each of which are index 45° from one another. Note that the spacers 14 do not rotate relative to other stirrers 12 and spacers 14 on the same shaft 26 and the shape of the spacer therefore is the shape of the overlapping area of two adjacent stirrers 12 as shown in Figure 5. Thus the spacer 14 shown in Figures 4 and 5 is not quadrilateral since the adjacent stirrers 12 are not indexed 90° from one another as is shown with the spacer and stirrer shown in Figures 1-3.

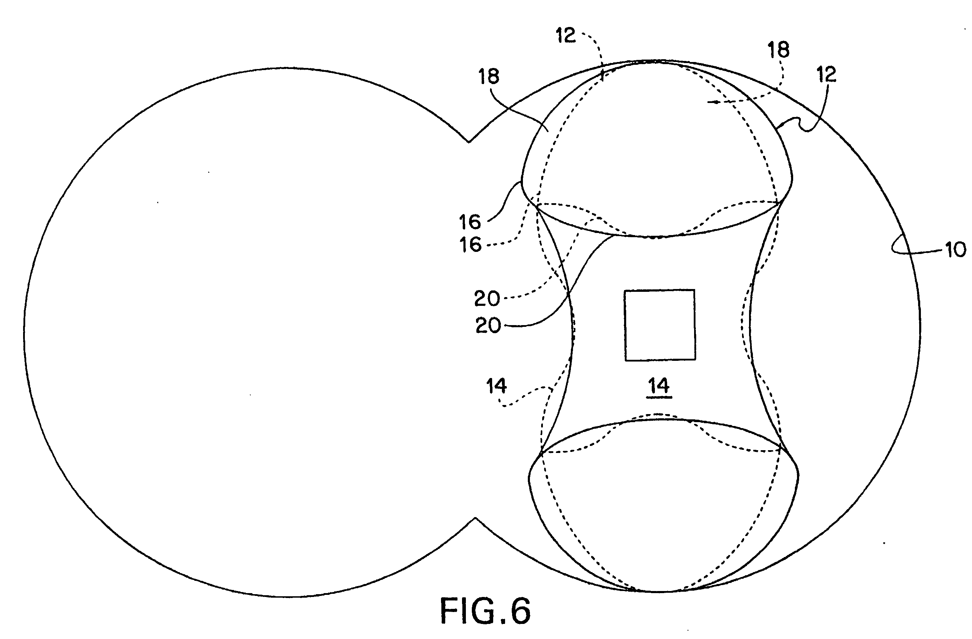

When comparing the geometric profile of each of the stirrers 12 shown in Figures 2 and 3, and when noting that one of the aims of the present invention is to maximize the surface area of the components of the reactor which contact the liquid, it is clear that the cycloid profile possesses greater surface area as compared to the involute stirrer 12, as shown in Figure 6. The cycloid stirrer 12 provides 18% more surface area which contacts the liquid than a corresponding involute stirrer. Primarily, this is due to the spacer profile of the cycloid spacer versus the involute spacer. Specifically, the face 18 of stirrer 12 in Figure 2 is longer than the face 18 of the stirrer 12 in Figure 3 because the spacer 14 in Figure 2 does not cover as much area as in Figure 3. This is also illustrated in Figure 6. Note that the corresponding size of the cycloid stirrer 12 versus the involute stirrer shown in Figure 6 means that each must fit within a reactor 22 and specifically within the inner contact surface 10.

As illustrated in Figure 7, a plurality of stirrers and spacers are mounted for rotation on shaft 26. Each reactor actually has two shafts 26. Each shaft 26 may preferably be a quadrilateral in cross-section for that portion 28 within the reactor upon which is mounted stirrers and spacers, while the portion 30 of the shaft projecting through and outside of the reactor maybe preferably be a different shape, such as cylindrical so that it can easily accommodate conventional seals (not shown and not a distinguishing feature of the present invention). The stirrers 12 shown in Figure 7 indicate the 90° indexing. Each stirrer has a spacer 14 and each spacer 14 firmly contacts each stirrer 12 with the exception of the spacer at each end of the shaft 26. The spacer 14 at each end of the reactor maybe maybe different than the remaining spacers particularly since the fluid mechanics of the liquid are different between the rotating and stirrers and spacer, as compared to the fluid mechanics between two rotating stirrers.

The 90° indexing of the cycloid stirrers 12 is more clearly shown in Figure 8, in cross-section. Reactor 22 is actually two intersecting cylinders 32 and 34. Thus the inner contact surface 10 of either cylinder 32, 34 of the reactor 22 has a diameter which is slightly larger than the length of a stirrer 12.

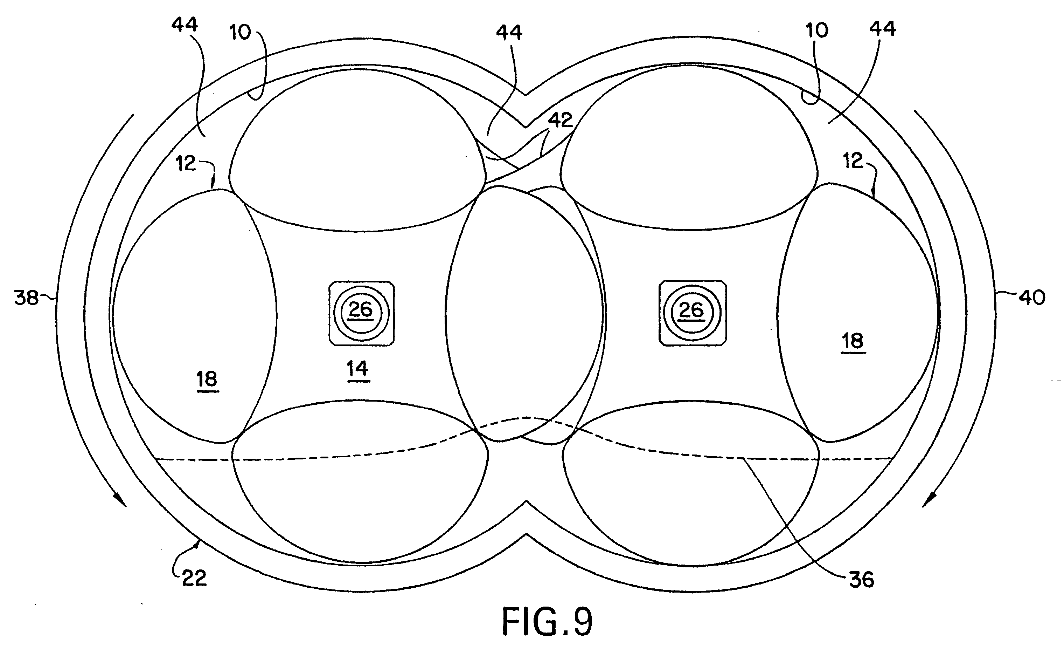

Figure 8 also illustrates the progression of a pair of stirrers 12, one within each reactor cylinder 32, 34 as the rotation of shafts 26 proceeds, at 0°, 20°, 40°, 60° and 80°. Note that the direction of rotation as shown in the 0° position, is such the shafts rotate in opposite directions, at the same rotational speed, whereby the stirrers 12 travel toward one another in the bottom of the reactor 22. While it is contemplated that the direction of rotation of the shafts can be oppositely rotated, where the stirrers travel toward one another at the top of the reactor, or rotated in the same direction with one another, either clockwise or counterclockwise, the direction discussed above illustrated in both Figures 8 and 9 is preferred.

As shown in Figure 8, the progression of the stirrers of any degree of shaft rotation permits many open spaces for vapor flow. Also, one peripheral edge 16 of a stirrer "wipes" the peripheral edge 16 of an . adjacent stirrer. Because of fluid mechanics, the entire inner contact surface 10 of reactor 22 as well as all exposed surfaces of the stirrers 12 and spacers 14 are wiped such that only a thin film of liquid remains.

In Figure 9, the polymer pool level 36 is shown. The rotation of each shaft 26 is illustrated by arrow 38 and 40. Note that the central portion of the polymer pool 36 is actually higher than other portions which is caused by the rotation of the shaft 26 and the lifting of the polymer by the multitude of stirrers 12. Also note, that as each stirrer 12 rotates from the position shown in Figure 9 in the directions illustrated by arrows 38 and 40, a thin film of polymer 42 is produced in the central most portion of the reactor 22 above the polymer pool 36. This polymer film 42 increases the wetted surface area of the reactor thus maximizing the surface area of the reactor. Also illustrated in Figure 9 are various vapor flow paths 44 which allow for the volatile vapor to be eliminated or removed from the reactor 22. Since the inner contact surface 10 of the reactor 22 is wiped with every rotation of shafts 26 (with stirrers 12), these vapor paths do not have any buildup of polymer to block the vapor path in any significant way.

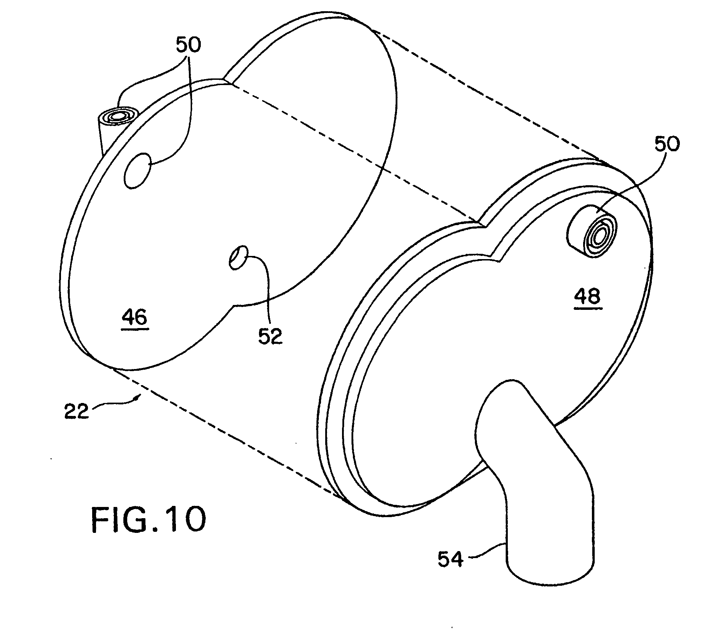

Figure 10 illustrates the reactor end plates 46 and 48. Each end plate 46 and 48 has a vapor takeoff or . vapor outlet 50. When comparing Figures 9 and 10, note that one of the vapor outlets 50 would be positioned on the top left-hand side of the reactor 22, while the other vapor takeoff outlet 50 would be positioned on the righthand side of the reactor. While the vapor outlet(s) 50 can be positioned anywhere within the top most portion of the reactor, having the outlets in the end plates 46, 48 is convenient for fabricating the reactor. In addition to the two vapor outlets 50, end plate 46 has an inlet orifice of 52, and reactor end plate 48 has a polymer outlet 54. The present reactor, primarily designed to be operated continuously could be operated batchwise. The low IV polymer arrives in inlet 52 and exits as a high IV polymer through outlet 54.

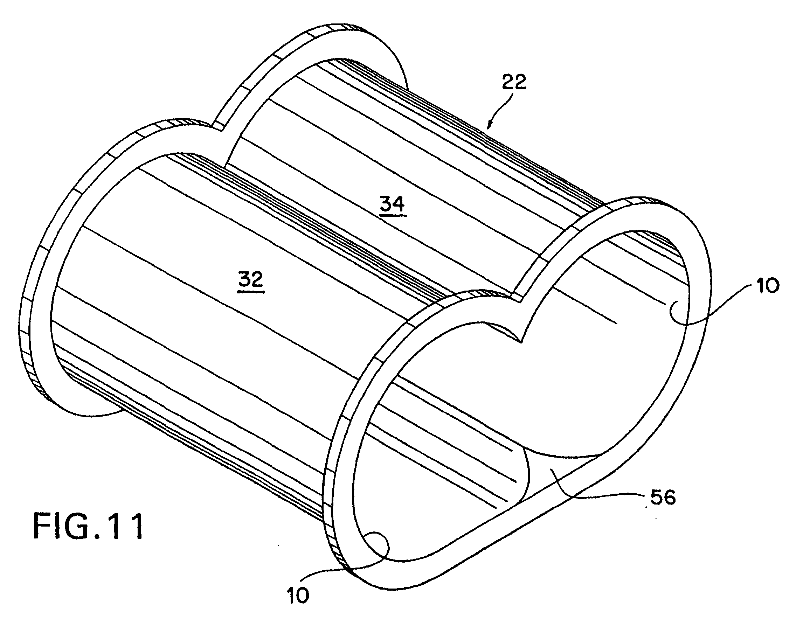

Figure 11 illustrates the intersecting cylinders 32, 34 of the reactor 22 and clearly illustrates a small deviation 56 which is the only surface within the reactor 22 which is not wiped to the same degree as the remaining polymer within the reactor. This deviation 56 is only at the outlet end of the reactor and permits the draining of the reactor 22 from both sides and from the lowest point of each cylinder as is clearly shown in Figure 11. It is likewise possible, however, to omit deviation 56 shown in Figure 11, and instead have dual polymer outlets in end plate 48 capable of completely draining even the lowest part of each dual cylindrical 32, 34 of the reactor 22.

In operation, polymer is introduced into the reactor 22 through the polymer inlet 52 and the amount of polymer exiting through outlet 54 is controlled in such a way as to produce a polymer pool 36. Preferably, each shaft 26 is rotated in the direction shown by arrows 38 and 40 in Figure 9. In this manner, each stirrer rotates in the same direction, at the same rational speed, as the shaft upon which it is secured, and wipes the inner wetted surface 10 of the reactor 22 exposed to the liquid polymer. Additionally, the rotation of the stirrers contact the polymer and pull it upwardly out of the pool of liquid 36 into a thin film on the face 18 of each stirrer, as well as on the inner contact surface 10 of the reactor 22. The thin film of polymer easily permits the volatile component (generally ethylene glycol when polyethylene terephthalate is the polymer, for example) to escape from the polymer, quickly, especially when the reactor is at an elevated temperature (sufficiently high to keep the polymer in liquid form, and yet not so high as to scorch, burn, or otherwise degrade the polymer when it is in a fluid state). Likewise, it may be preferable to introduce a vacuum through the vapor outlet 50 to further increase the removal of the volatile component. As each stirrer pulls away from its corresponding adjacent stirrer an additional thin polymer surface is produced as illustrated by 42 in Figure 9. This further increases the surface area to reactor volume ratio. However, this polymer film is substantially reduced if the shafts 26 and the stirrers 12 are rotated at a very low rate, or are rotated in any other combinations of rotational directions. Contrarily, if the shafts and stirrers are rotated at too high of a revolution, the polymer is slung throughout the entire reactor and completely blocks the vapor blow path 44, thus defeating the ability of the reactor to remove the volatile component and thereby defeating the ability of the reactor to increase the IV. The optimum rotational speed of the shafts must be determined based upon the polymer employed, the IV of the polymer as it is introduced into the reactor, as well as the IV of the polymer exiting the reactor, the temperature of the reactor, etc. Generally, the rotational speed will be between 2-10 rpm (revolutions per minute) and more preferably about 3-5 rpm.

Although the spacing between the peripheral edge 16 of the stirrers and the inner surface 10 of the reactor can vary depending on the operating conditions of the reactor, the polymer employed, the fluid mechanics of the polymer at operating conditions (for example to IV), etc., it is generally believed that the spacing can be between 2-10mm, preferably 1-3mm. Likewise the spacing between the peripheral edges 16 of adjacent stirrers on different shafts is believed to be within the above range. Lastly, the spacer thickness and the thickness of the stirrers is also believed to be within the above stated range. Again, all the spacing is dependent upon the conditions mentioned above.

Thus it can be seen with the rotation of the shafts in opposite directions at the same rotational speed, the perimeter edge 16 of each stirrer 12 wipes a portion of the inner contact surface 10 of the reactor 22 leaving a portion which is not wiped by that particular perimeter edge. However, the fluid mechanics of the polymer wipes the remaining inner contact surface 10 not wiped by a stirrer 12. The faces 18 of each stirrer 12 are wiped by adjacent stirrers on the adjacent shaft, and the spacer edges 20 are also wiped by fluid mechanics of the polymer on the peripheral edge 16 of an adjacent stirrer on the adjacent shaft. Additionally, as the faces 18 of the stirrers pass through the polymer pool 36, the drag on the faces by the polymer also serves to wipe the faces. Lastly, the deviation 56 is wiped by action of the flowing polymer out of the reactor 22 through outlet 54. Thus, all interior "wetted" surfaces of the reactor which are exposed to the liquid polymer are wiped with each rotation of each shaft. The shaft are designed to be rotated at the same rotational speed but in opposite directions.

The wetted surface area to reactor volume ratio is maximized with the present invention because the spacer thickness is the thinnest possible which still permits polymer to adequately wet-out on each face 18 of the stirrers 12; as well as manufacturing the stirrer thickness as thin as structurally possible, considering the reactor operating conditions. By creating many thin films of polymer on all interior surfaces within the reactor, the volatile component evaporates or flashes-off as fast as possible, under the operating conditions of the reactor. Thus the reactor of the present invention maximizes the surface area and reactor volume compared with prior wiped wall type reactors, thus yielding the highest efficiency in converting low I.V. liquid to relatively high I.V. liquid. For example, PET entering reactor 22 may have an I.V. from about 0.40 to 0.65, and exit the reactor with an I.V. of 0.90 - 1.15, depending on the operating conditions of the reactor and the polymer employed.

Thus it is apparent that there has been provided with accordance with the invention a reactor that fully satisfies the object, aims, and the advantage as set forth above. While the invention has been described in conjunction with specific embodiments thereof, it is evident that many alternatives modifications and . variation will be apparent to those skilled in the art such as those set forth in Figure 11 or wrapping the reactor in a jacket to heat it as it generally known, or to make each shaft 26 hollow so that a heating medium can be introduced there through to heat the shaft, stirrers and spacers, and others apparent to those skilled in the art in light of the foregoing description. Accordingly, the present invention is intended to embrace such alternatives, modifications, and variation that falls within the scope of the appended claims.

## Claims

1. A polycondensation reactor comprising:
a) a reactor (22) having a substantially horizontally extending interior chamber for polycondensation of a polymer;
b) an inlet (52) at one end of the reactor (22) for introducing a low I.V. polymer into said interior chamber;
c) at least one outlet (54) for said reactor, opposite said inlet, for extracting a high I.V. polymer from said interior chamber ;
d) an outlet (50) in said reactor communicating with said interior chamber for exhausting vapor;
e) at least two rotatable shafts (26), mounted substantially horizontally and extending the length of said reactor (22) through said interior chamber ;
f) a plurality of stirrers (12) mounted on each of said shafts;
g) a plurality of spacers (14) for spacing apart each stirrer on each of said at least two shafts (26) such that said stirrers (12) on one shaft intermesh with said stirrer (12) on another shaft;
whereby said stirrers (12) are shaped so as to constantly wipe the surface (10) of said interior chamber, and the edge (16) of an intermeshing stirrer on one shaft wipes the edge of an adjacent stirrer on another shaft, and the intermeshing stirrer wipes between faces (18) of a stirrer to the rear,and a stirrer to the front of the adjacent stirrer.

2. The reactor (22) of claim 1, whereby said plurality of stirrers (12) are shaped as a cycloid.

3. The reactor (22) of claim 1, whereby said plurality of stirrers (12) are shaped as an involute.

4. The reactor (22) of claim 1, wherein said interior chamber (35) is at least two overlapping cylindrical chambers (32, 34).

5. The reactor (22) of claim 1, wherein each of said plurality' of stirrers (12) comprises two contact faces, each face having a front and back surface.

6. The reactor (22) of claim 5, wherein each of said stirrer is indexed 90° from the stirrer in front and the stirrer in back, on the same shaft.

7. The reactor (22) of claim 6, wherein each of said spacers (14) is shaped in cross-section the same as the cross-section of two overlapping stirrers.

8. The reactor (22) of claim 5, wherein each of said stirrer is indexed 45° from the stirrer in front and the stirrer in back, on the same shaft.

9. The reactor (22) of claim 5, wherein the stirrers on each shaft are aligned in the same manner.

10. The reactor (22) of claim 5, wherein said two rotatable shafts (26) rotate in opposite directions.

11. The reactor (22) of claim 10, wherein the said two shafts are positioned in said reactor such that said stirrers overlap one another, thus wiping said front and back surfaces of each contact face.

12. The reactor (22) of claim 11, wherein said rotation of said shafts is such that a thin film of polymer is formed when said stirrers rotate away from one another.

## Patentansprüche

1. Polykondensationsreaktor mit:
a) einem Reaktor (22) mit einer sich im wesentlichen horizontal erstreckenden Innenkammer für die Polykondensation eines Polymers;
b) einem Einlaß (52) an einem Ende des Reaktors (22) zum Einbringen eines Polymers mit niedriger intrinsischer Viskosität in die Innenkammer;
c) wenigstens einem dem Einlaß gegenüberliegenden Auslaß (54) für den Reaktor zum Extrahieren eines Polymers mit hoher intrinsischer Viskosität aus der Innenkammer;
d) einem Auslaß (50) in dem Reaktor, der mit der Innenkammer zum Ablassen von Dampf in Verbindung steht;
e) mindestens zwei drehbaren Wellen (26), die im wesentlichen horizontal angebracht sind und sich über die Länge des Reaktors (22) durch die Innenkammer erstrecken;
f) mehreren Rührern (12), die an jeder der Wellen angebracht sind;
g) mehreren Abstandhaltern (14) zum beabstandeten Anordnen jedes Rührers auf jeder der mindestens zwei Wellen (26), so daß die Rührer (12) auf einer Welle mit dem Rührer (12) auf einer anderen Welle kämmen;
wobei die Rührer (12) so geformt sind, daß sie die Oberfläche (10) der Innenkammer kontinuierlich wischen, und daß der Rand (16) eines kämmenden Rührers auf einer Welle den Rand eines benachbarten Rührers auf einer anderen Welle wischt, und daß die kämmenden Rührer (12) zwischen Seiten (18) eines hinter und eines vor den benachbarten Rührern angeordneten Rührers wischt.

2. Reaktor (22) nach Anspruch 1, bei dem die mehreren Rührer (12) als Zykloide geformt sind.

3. Reaktor (22) nach Anspruch 1, bei dem die mehreren Rührer (12) als Involute geformt sind.

4. Reaktor (22) nach Anspruch 1, bei dem die Innenkammer (35) aus wenigstens zwei überlappenden zylindrischen Kammern (32, 34) besteht.

5. Reaktor (22) nach Anspruch 1, bei dem jeder der mehreren Rührer (12) zwei Kontaktflächen aufweist, die jeweils eine Vorder- und eine Rückseite haben.

6. Reaktor (22) nach Anspruch 5, bei dem jeder der Rührer um 90° gegenüber den auf der selben Welle davor und dahinter angeordneten Rührem versetzt ist.

7. Reaktor (22) nach Anspruch 6, bei dem jeder der Abstandhalter (14) die gleiche Querschnittsform hat wie zwei überlappende Rührer.

8. Reaktor (22) nach Anspruch 5, bei dem jeder der Rührer um 45° gegenüber den auf der selben Welle davor und dahinter angeordneten Rührern versetzt ist.

9. Reaktor (22) nach Anspruch 5, bei dem die Rührer auf jeder Welle in der gleichen Weise ausgerichtet sind.

10. Reaktor (22) nach Anspruch 5, bei dem die beiden drehbaren Wellen (26) in entgegengesetzte Richtungen drehen.

11. Reaktor (22) nach Anspruch 10, bei dem die beiden Wellen in dem Reaktor derart angeordnet sind, daß sich die Rührer überlappen, so daß sie die Vorder- und die Rückseite jeder Kontaktfläche wischen.

12. Reaktor (22) nach Anspruch 11, bei dem die Wellen derart drehen, daß ein Dünnfilm aus Polymer gebildet wird, wenn sich die Rühreinrichtungen voneinander weg drehen.

## Revendications

1. Réacteur de polycondensation comprenant :
a) un réacteur (22) comportant une chambre intérieure s'étendant essentiellement horizontalement pour la polycondensation d'un polymère ;
b) une admission (52) à une extrémité du réacteur (22) pour introduire un polymère à faible V.I. dans ladite chambre intérieure ;
c) au moins un refoulement (54) pour ledit réacteur, opposé à ladite admission, pour extraire un polymère à haute V.I. de ladite chambre intérieure ;
d) un refoulement (50) dans ledit réacteur communiquant avec ladite chambre intérieure pour faire sortir la vapeur ;
e) au moins deux arbres rotatifs (26), montés essentiellement horizontalement et traversant ladite chambre intérieure sur la longueur dudit réacteur (22) ;
f) une pluralité d'agitateurs (12) montés sur chacun desdits arbres ;
g) une pluralité de butées d'espacement (14) pour espacer chaque agitateur sur chacun desdits au moins deux arbres (26) de telle sorte que lesdits agitateurs (12) sur un arbre sont engrenés avec ledit agitateur (12) sur l'autre arbre ;
dans lequel lesdits agitateurs (12) sont formés afin d'essuyer constamment la surface (10) de ladite chambre intérieure, et le bord (16) d'un agitateur engrenant sur un arbre essuie le bord d'un agitateur adjacent sur un autre arbre, et l'agitateur engrenant essuie entre les faces (18) d'un agitateur vers l'arrière et d'un agitateur vers l'avant de l'agitateur adjacent.

2. Réacteur (22) selon la revendication 1, dans lequel les agitateurs de ladite pluralité d'agitateurs (12) ont la forme d'une cycloïde.

3. Réacteur (22) selon la revendication 1, dans lequel les agitateurs de ladite pluralité d'agitateurs (12) ont la forme d'une développante de cercle.

4. Réacteur (22) selon la revendication 1, dans lequel ladite chambre intérieure (35) est au moins formée par deux chambres cylindriques se chevauchant (32, 34).

5. Réacteur (22) selon la revendication 1, dans lequel chaque agitateur de ladite pluralité d'agitateurs (12) comprend deux faces de contact, chaque face ayant une surface avant et une surface arrière.

6. Réacteur (22) selon la revendication 5, dans lequel chacun desdits agitateurs est indexé à 90° par rapport à l'agitateur placé devant et à l'agitateur à placé derrière, sur le même arbre.

7. Réacteur (22) selon la revendication 6, dans lequel chacune desdites butées d'espacement (14) a une coupe transversale formée de la même manière que la coupe transversale de deux agitateurs se chevauchant.

8. Réacteur (22) selon la revendication 5, dans lequel chacun desdits agitateurs est indexé à 45° par rapport à l'agitateur placé devant et à l'agitateur placé derrière, sur le même arbre.

9. Réacteur (22) selon la revendication 5, dans lequel les agitateurs sur chaque arbre sont alignés de la même manière.

10. Réacteur (22) selon la revendication 5, dans lequel lesdits deux arbres rotatifs (26) tournent dans des directions opposées.

11. Réacteur (22) selon la revendication 10, dans lequel lesdits deux arbres sont positionnés dans ledit réacteur de telle sorte que lesdits agitateurs se chevauchent, pour ainsi essuyer lesdites surfaces avant et arrière de chaque face de contact.

12. Réacteur (22) selon la revendication 11, dans lequel ladite rotation desdits arbres est telle qu'un film mince de polymère est formé lorsque lesdits agitateurs tournent à distance l'un de l'autre.
